# FASCICULE DE BREVET EUROPEEN

(11) **EP 2 776 709 B1**
(45) Date de publication et mention de la délivrance du brevet: **09.08.2017**
(21) Numéro de dépôt: 12787427.9
(22) Date de dépôt: 09.11.2012
(51) Int. Cl.: F03D 1/02, F03D 1/04, F03D 3/02, F03D 3/04, F03B 17/06, F03B 13/10, F03D 3/00, F03D 9/25

(54) **DISPOSITIF DE RECUPERATION D'ENERGIE A PARTIR D'UN FLUIDE EN MOUVEMENT**
VORRICHTUNG ZUR RÜCKGEWINNUNG VON ENERGIE AUS STRÖMENDEN FLÜSSIGKEITEN
DEVICE FOR RECOVERING ENERGY FROM A MOVING FLUID

(30) Priorité: 10.11.2011 FR 1160238
(43) Date de publication de la demande: 17.09.2014
(73) Titulaire: Geps Innov, 44600 Saint-Nazaire (FR)
(72) Inventeur: BARSACQ, Mathieu, 44230 SAINT-SEBASTIEN-SUR-LOIRE (FR)
(74) Mandataire: Novagraaf Technologies
(86) Numéro de dépôt international: PCT/EP2012/072315
(87) Numéro de publication internationale: WO 2013/068556

(56) Documents cités:
- WO-A1-2004/085845
- US-A- 5 440 176
- US-A1- 2010 220 466
- US-A1- 2011 229 304

## Description

La présente invention concerne un dispositif de récupération d'énergie à partir d'un fluide en mouvement dans un milieu ouvert. L'invention trouve plus particulièrement des applications dans le domaine des énergies éoliennes et hydroliennes.

Actuellement, les concepteurs d'éoliennes et d'hydroliennes cherchent à améliorer le rendement de leurs installations en se focalisant sur l'amélioration des performances individuelles de chacune des éoliennes ou hydroliennes ou en se lançant dans la course au gigantisme en augmentant le nombre ou la taille de celles-ci afin de réduire la proportion des frais fixes dans le coût du kilowatt/heure produit.

Le captage de l'énergie éolienne est toutefois limité par des phénomènes physiques. Plus précisément, Albert Betz a montré que la puissance théorique maximale récupérable par une éolienne est égale à 16/27 de la puissance incidente du vent qui traverse l'éolienne. Cette limite est classiquement appelée limite de Betz.

Par ailleurs, l'impact visuel et l'emprise en surface des champs d'éoliennes ou d'hydroliennes constituent également des freins à l'augmentation en taille de ces systèmes.

Les éoliennes disposées en mer dans des champs offshore, qui sont classiquement des éoliennes à axe de rotation horizontal, présentent également d'autres inconvénients par rapport aux éoliennes terrestres, à savoir:
- dans le cas de structures flottantes, la longueur des pales doit également être limitée en raison des mouvements dynamiques de la structure qui pourraient engendrer des accélérations dévastatrices pour l'éolienne;
- les éoliennes doivent être suffisamment espacées entre elles pour limiter les effets de sillage.

S'agissant des hydroliennes, elles sont à l'heure actuelle disposées de manière fixe au fond de l'eau et présentent aussi les inconvénients suivants:
- leur diamètre doit être réduit pour limiter l'entrave à la navigation de surface;
- comme pour les éoliennes, elles doivent aussi être suffisamment espacées entre elles pour limiter les effets de sillage.

Un premier principe général des solutions ici exposées repose sur l'agencement d'au moins deux ensembles à turbines orientées selon l'axe du flux de fluide considéré, de manière à ce qu'au moins une partie du flux traversant l'ensemble de turbines amont combinée au flux longeant l'extrados des éléments de guidage soient dirigés vers les turbines de l'ensemble disposé en aval et contribuent à l'accélération du flux pénétrant dans les turbines aval.

A cet effet, la présente invention propose un dispositif de récupération d'énergie à partir d'un fluide en mouvement comprenant au moins deux turbines à axes de rotation sensiblement parallèles couplées à au moins un alternateur pour produire de l'énergie électrique lorsque le fluide en mouvement entraîne en rotation lesdites turbines,caractérisé en ce que :
- chaque turbine est montée entre un premier élément de guidage de flux et un second élément de guidage de flux dans une première direction, perpendiculaire au sens de déplacement du flux de fluide, chacun des éléments de guidage étant de forme générale profilée,
- et en ce que ce dispositif comporte au moins une première turbine et au moins une deuxième turbine qui est disposée en aval de la première turbine dans une deuxième direction parallèle au sens de déplacement du flux, ladite deuxième turbine est décalée dans la première direction, de sorte que le premier et/ou le second élément de guidage de flux de la première turbine soit positionné dans la première direction entre les deux éléments de guidage de la deuxième turbine.

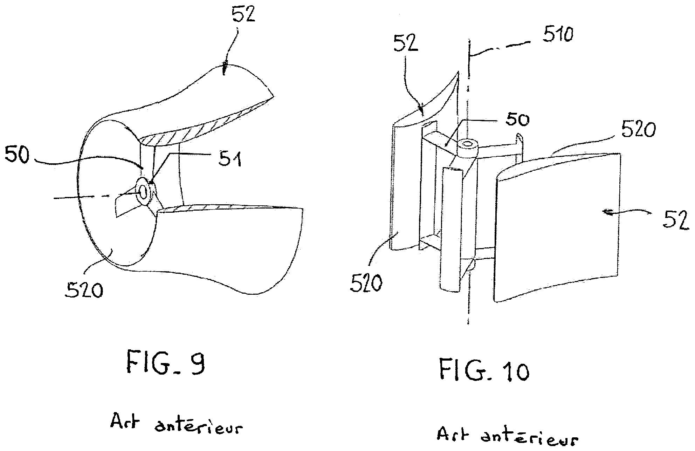

Un second principe général des solutions ici exposées repose sur les considérations suivantes :
Les dispositions actuelles (voir exemples figures 9,10) d'éoliennes ou hydroliennes multiples sont conçues de telle sorte que :
   - l'écoulement concernant chaque turbine 50 soit optimisé par l'utilisation d'un ou plusieurs carénage(s) 52 annulaire (figure 9), avec un axe 51 de rotation horizontal, ou latéraux, alors chacun en forme d'aile (figure 10), avec un axe 510 de rotation vertical, et avec chacun un bord intérieur 520 typiquement convexe,
   - les interactions entre les différentes turbines soient les plus minimes possibles.

Par ailleurs, les études complètes menées notamment dans deux thèses : AUMELAS sept-2011 et MENCHACA - 2011 concernent des carénages verticaux pour les turbines à axe vertical. Une caractéristique marquée est la convexité côté turbine, c'est-à-dire côté intérieur du carénage.

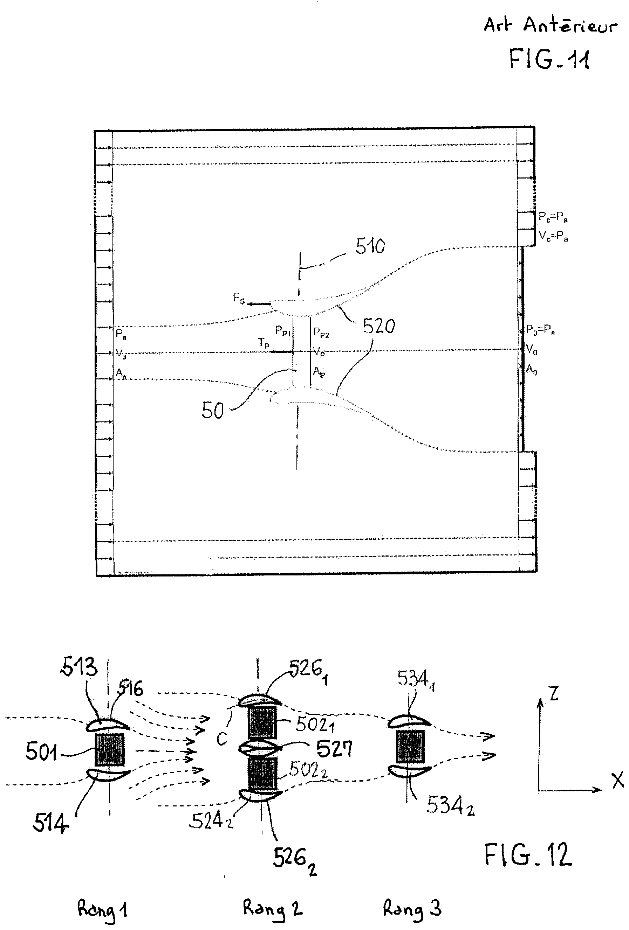

L'objectif de ces accessoires est de contribuer à un écoulement tel qu'illustré par la figure 11. Selon les hypothèses de Weler, ou de Hansen (« Aerodynamics of wind Turbine » aérodynamique des turbines d'éoliennes), l'efficacité des turbines équipées de carénage(s) ou appendice (s) augmente dans les proportions de 2 à 5 et permette de dépasser en rendement la limite de Betz de 59%.

Par ailleurs, on peut considérer que WO 2011/049843 divulgue un dispositif de récupération d'énergie à partir d'un fluide en mouvement comprenant au moins une première et au moins une deuxième turbines à axes de rotation sensiblement parallèles et couplées à au moins un alternateur pour produire de l'énergie électrique lorsque le fluide en mouvement entraîne en rotation lesdites turbines, la, ou chaque, deuxième turbine étant, par rapport à la ou chaque première turbine :
- décalée dans une première direction (Z) perpendiculaire au sens (F) du flux de fluide,
- et disposée en aval dans une deuxième direction (X) parallèle au sens du flux.

Or, il s'avère que le rendement global de l'installation avec les turbines disposées sur plusieurs rangs amont/aval dépend de leur positionnement relatif, et en particulier de l'organisation des appendices ou carénages précités, appelés ci-après « éléments de guidage ».

Ainsi est-il proposé:
- que chaque turbine soit montée, dans ladite première direction (Z), entre un premier et un second éléments de guidage de flux, chacun de forme générale profilée,
- que le dispositif comporte au moins deux deuxièmes turbines décalées l'une par rapport à l'autre dans la première direction (Z), de sorte que le premier élément de guidage de la, ou chaque, première turbine soit positionné dans la première direction (Z) entre les deux éléments de guidage de l'une des deuxièmes turbines et que le deuxième élément de guidage de la, ou chaque, première turbine soit positionné dans la première direction (Z) entre les deux éléments de guidage de flux de l'autre deuxième turbine,
- et que le premier et/ou le second élément de guidage de flux de la, ou chaque, première turbine est positionné dans la première direction (Z) entre les deux éléments de guidage de chaque deuxième turbine.

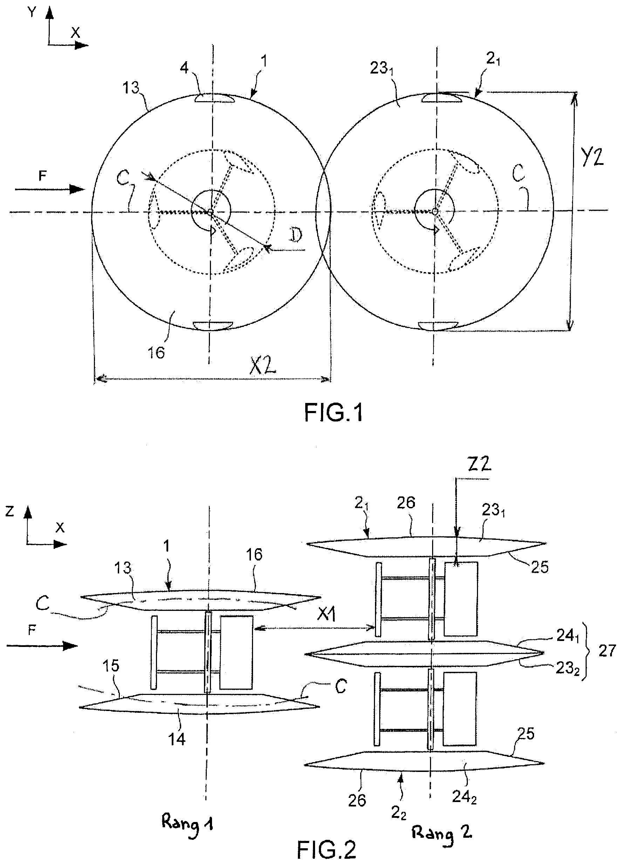

De préférence, il s'agira en fait d'un dispositif dit multi-étages et multi rangs, avec des éléments de guidage d'axe (sensiblement) perpendiculaire à l'axe des turbines (à corde sensiblement horizontale pour des turbines à axe vertical), qui ont pour fonction de créer un « frein » constitué par le premier rang de turbine(s), lequel, associé aux éléments de guidage représentés notamment figures 1 et 12 ci-joints, contribue à l'amélioration notable des performances du/des rang(s) suivant(s).

Dans ce cadre, un aspect de la présente invention a pour but de proposer une solution visant à pallier tout ou partie des inconvénients précités et notamment à améliorer un rendement global de captage de l'énergie cinétique de fluides en mouvement en milieu ouvert, en dépassant en rendement la limite de Betz de 59%, ceci quand plus d'une turbine est en jeu, c'est-à-dire dans le cas où au moins une turbine influence une autre turbine, du fait du passage à travers la première turbine d'une partie au moins du flux de fluide reçu par la seconde.

En liaison avec cela, on conseille que les éléments de guidage aient favorablement un profil convexe du côté opposé à la turbine, au moins pour le premier rang, voire, de préférence, pour l'élément de guidage extérieur de chaque deuxième turbine (le plus et le plus bas du second rang), avec donc un extrados convexe.

De préférence, la « première direction » (Z) précitée sera une direction verticale, bien qu'une orientation horizontale soit possible.

Dans le contexte de l'invention, on entend par forme profilée une forme tridimensionnelle dont la section transversale comporte un bord d'attaque situé en amont du profil par rapport au flux, un bord de fuite situé en aval par rapport au flux, reliés par une face dite extrados située côté extérieur par rapport à la turbine et une face dite intrados, située côté intérieur par rapport à la turbine.

Les éléments de guidage seront par exemple des ailerons présentant une section profilée dans la direction du flux et une grande dimension dans le cas d'éléments de type « aile », ou un diamètre dans le cas d'éléments de type « lentille ». Dans les deux cas, la corde de la section est définie comme la ligne joignant le centre de courbure du bord d'attaque et le centre de courbure du bord de fuite du profil. Pour les ailerons de type « aile » la plus grande dimension correspond à l'envergure et l'allongement correspond au rapport entre l'envergure et la longueur de la corde. Dans le cas d'élément de type « lentille » l'élément de guidage est défini par sa section et son diamètre de révolution.

De manière surprenante, les inventeurs ont découvert au cours d'essais que cette disposition particulière d'une deuxième turbine équipée d'élément de guidage, par rapport à une première turbine équipée d'éléments de guidage, permet d'obtenir des vitesses de rotation accrues pour des deuxièmes turbines. Ces essais ont montrés que la vitesse de rotation de la deuxième turbine est au moins 1,5 fois supérieure à celle de la première turbine, et peut être jusqu'à 3 fois supérieure à celle de la première turbine.

Il s'est avéré qu'avec des éléments de guidage de flux profilés ayant des extrados convexes comme pré-indiqué, le fluide (notamment un liquide) passant, dans le cas d'une « première direction » (Z) verticale, au-dessus et au-dessous de ces extrados de la première turbine (ou série de turbines) est accéléré sur ces surfaces externes convexes, lesquelles concentrent et font accélérer le flux de fluide entrant de la deuxième turbine (ou série de turbines). Ce fluide accéléré sur l'extrados aspire le fluide sortant de la première turbine avant d'alimenter les deuxièmes turbines, ce qui a pour effet de réduire la perte de charge globale du dispositif (voir écoulement en pointillés figure 12).

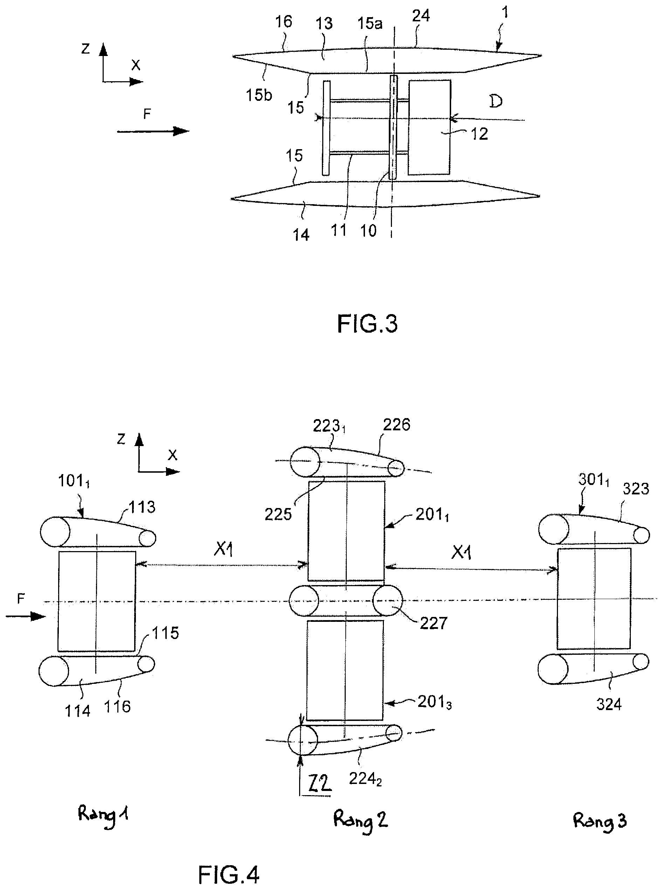

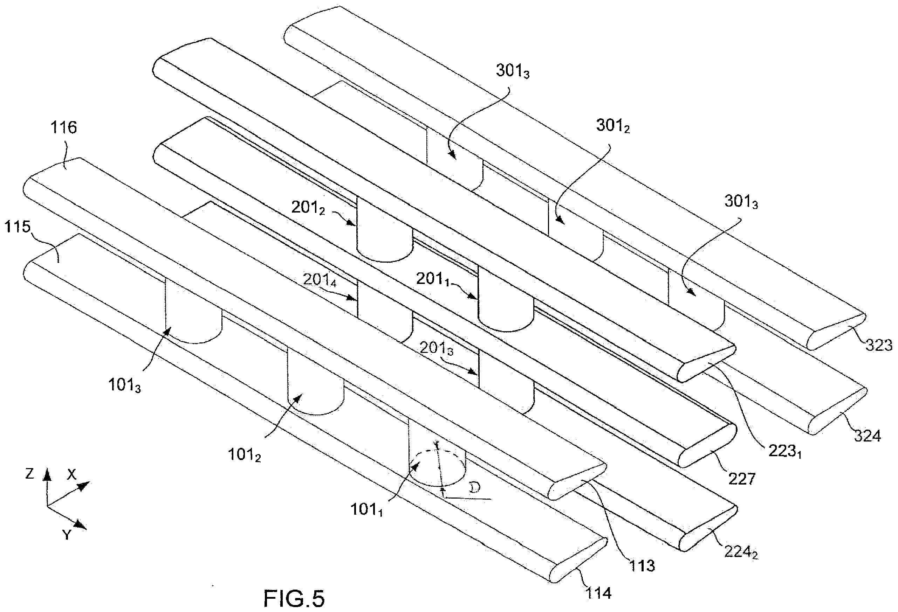

On notera que les expressions « turbines décalées l'une par rapport à l'autre » ou « turbine disposée en aval » d'une autre, visent à indiquer que ces turbines présentent entre elles (D étant le diamètre des turbines, comme illustré notamment figure 1):
- suivant la direction X parallèle au flux, une distance X1 (figures 2,4) comprise entre environ 1D et environ 5 D (à 20% près), pour obtenir un effet recherché de sillage,
- et/ou, suivant la direction Y perpendiculaire au flux (horizontale sur les figures ci-après), un profil qui peut être continu (aile d'avion) et servir de structure support aux turbines, avec, quoi qu'il en soit, une distance comprise entre environ 1D et environ 5D (à 20% près), pour le même effet de sillage, les liaisons pouvant même être continues, comme figure 5 ci-après,
- et/ou, suivant la direction Z (direction verticale, ou parallèle à l'axe de rotation des turbines), une possible disposition sensiblement accolée par leurs éléments de guidage de flux, alors sans écart autre que fonctionnel, en bénéficiant si possible d'un effet de fente, même si un écart jusqu'à environ 0,5D est possible, sans toutefois être souhaité.

Concernant les épaisseurs relatives entre les turbines et les éléments de guidage de flux qui les encadrent, on préférera qu'il y ait :
- suivant la direction X parallèle au flux, une dimension X2 des éléments de guidage (figure 1) comprise entre environ 0.5 D et environ 1,5 à 2D (à 20% près), et/ou,
- suivant la direction Y: une dimension Y2 de ces éléments comprise entre environ 2D et environ 4D (à 20% près).

Suivant la direction Z, on conseille par ailleurs que l'épaisseur Z2 desdits profils (voir exemple figures 2,4) ne soit pas supérieure à 0,5 D (à 20% près). Sinon on risque de se trouver avec de profils qui feraient office de frein eux-mêmes, sans procurer d'effet d'accélération mais plutôt une augmentation de la trainée par effet tourbillonnaire.

Ainsi, on doit comprendre qu'une « première turbine » influencera favorablement une « seconde (ou autre) turbine » placée dans son sillage, du fait du passage à travers la première turbine d'une partie au moins du flux de fluide reçu par la seconde.

On précise que les distances X1 entre les rangs, par exemple 1 et 2 (figures 2,4) et 2-3 (figure 4) peut varier (idem en Y, voire en Z).

Selon un mode de réalisation, ladite deuxième turbine est en outre décalée par rapport à la première turbine dans une troisième direction, perpendiculaire à la première direction et à la deuxième direction. Dans ce cas, la première turbine présente avantageusement un élément de guidage à allongement suffisant afin de présenter une portion disposée en amont de la deuxième turbine dans la deuxième direction.

Selon un mode de réalisation, ledit dispositif comprend au moins deux deuxièmes turbines décalées l'une par rapport à l'autre dans la première direction, de sorte que le premier élément de guidage de la première turbine soit positionné dans la première direction entre les deux éléments de guidage d'une deuxième turbine et que le deuxième élément de guidage de la première turbine soit positionné dans la première direction entre les deux éléments de guidage de flux de l'autre deuxième turbine.

Avantageusement, les deuxièmes turbines présentent des éléments de guidage de flux accolés, les deux dits éléments de guidage formant un élément de guidage dit intermédiaire, en une ou deux parties, avec une surface constituant une surface interne de guidage pour une deuxième turbine et une surface constituant une surface interne de guidage pour l'autre deuxième turbine.

Dans le cas d'une première direction verticale, et de turbines à axe vertical, les tiges axiales des deux deuxièmes turbines sont avantageusement coaxiales.

Selon un mode de réalisation, les éléments de guidage formant l'élément de guidage intermédiaire des deuxièmes turbines sont disposés dans la première direction sensiblement à mi-distance entre les deux éléments de guidage de la première turbine, de manière à ce que le flux sortant de la première turbine soit réparti à parts sensiblement égales entre deux deuxièmes turbines.

Selon un mode de réalisation, les éléments de guidage de la première turbine d'une part et les éléments de guidage de la ou des deuxièmes turbines d'autre part sont disposés de manière à se superposer partiellement dans la première direction, de manière notamment à réduire l'encombrement total du dispositif.

Selon un mode de réalisation, le dispositif comprend au moins deux deuxièmes turbines décalées l'une par rapport à l'autre dans la troisième direction, les premiers et seconds éléments de guidage des premières turbines s'étendant dans leur plus grande dimension de préférence dans la troisième direction entre les deux premières turbines, avantageusement les éléments de guidage des premières turbines sont formés d'une même pièce.

Selon un mode de réalisation, une première turbine est positionnée dans la troisième direction entre deux deuxièmes turbines décalées l'une par rapport à l'autre dans ladite troisième direction.

Selon un mode de réalisation, le dispositif comprend au moins deux premières turbines décalées l'une par rapport à l'autre dans la troisième direction, les premiers et seconds éléments de guidage des premières turbines s'étendant dans leur plus grande dimension de préférence dans la troisième direction entre les deux premières turbines, avantageusement les éléments de guidage des premières turbines sont formés d'une même pièce.

Selon un mode de réalisation, chaque deuxième turbine est positionnée dans la troisième direction entre deux premières turbines décalées l'une par rapport à l'autre dans ladite troisième direction.

Selon un mode de réalisation, le dispositif comprend au moins une troisième turbine décalée par rapport à une première turbine dans la deuxième direction, de sorte que la troisième turbine soit disposée en aval de la deuxième turbine par rapport au sens de déplacement du flux de fluide, ladite troisième turbine ayant de préférence un positionnement dans la première direction sensiblement identique à celui de ladite première turbine.

Selon un mode de réalisation, le dispositif comprend au moins une première turbine, au moins quatre deuxièmes turbines disposées en deux rangées superposées de deux deuxièmes turbines, et au moins une troisième turbine, les turbines d'une rangée étant décalées les unes des autres dans la troisième direction. Selon un mode de réalisation, il comprend au moins une rangée de deux ou plusieurs premières turbines, au moins deux rangées superposées de deux ou plusieurs deuxièmes turbines et au moins une rangée de deux ou plusieurs troisièmes turbines.

Selon un mode de réalisation, ledit premier élément de guidage et/ou ledit second élément de guidage de la première turbine présente un extrados convexe selon la corde de l'élément de guidage, de manière à encore optimiser l'accélération du fluide se déplaçant à proximité dudit extrados.

Avantageusement, les éléments de guidage sont de type « aile », avec des bords d'attaque et de fuite décalés l'un de l'autre dans la deuxième direction, et s'étendant dans leur plus grande dimension sensiblement parallèlement à la troisième direction.

Selon un mode de réalisation, pour chaque turbine, les éléments de guidage positionnés en vis-à-vis présentent des intrados de forme sensiblement convexes de telle sorte que les bords d'attaque et les bords de fuite des deux éléments de guidage forment respectivement un convergent pour concentrer le flux entrant dans la turbine et un divergent contribuant à mieux diffuser le flux sortant de la turbine.

Par ailleurs, les intrados ou surfaces internes peuvent présenter une convexité dans la troisième direction, notamment dans le cas de turbines à axe horizontal.

Les surfaces internes peuvent présenter une convexité moins importante que les extrados ou surfaces externes. Les surfaces internes peuvent former un intrados sensiblement plan, avec uniquement des portions d'extrémité, de type inclinées ou convexes formant convergent et divergent, reliées entre elles par des portions centrales sensiblement planes.

Ainsi, selon un mode de réalisation, pour chaque turbine, la surface interne des deux éléments de guidage de flux comprend une portion centrale sensiblement plane, les portions centrales des deux éléments de guidage étant sensiblement parallèles entre elles.

Selon un mode de réalisation, chaque turbine comprend en outre deux éléments de guidage supplémentaires, de forme profilé, décalés l'un de l'autre dans la troisième direction, disposés perpendiculairement aux éléments de guidages précités.

Avantageusement, les turbines sont montées sur une structure support. Selon un exemple de réalisation de l'invention, la structure support est apte à s'orienter automatiquement, de manière naturelle ou forcée, de sorte que la deuxième direction soit sensiblement parallèle au sens du flux.

Selon un mode de réalisation, ledit dispositif est un dispositif marin, comprenant une structure offshore flottante et ancrée au fond sous-marin en un ou plusieurs points, ou une structure offshore fixe, comprenant des turbines de type éolienne et/ou hydrolienne.

Selon un mode de réalisation particulier, la structure support munie des turbines est flottante et le dispositif comporte au moins deux ensembles de turbines chacun comprenant une première turbine et deux deuxièmes turbines telles que définies précédemment, un premier ensemble de turbines étant disposé au-dessus de la ligne de flottaison de la structure support et un deuxième ensemble de turbines étant disposé au-dessous de la ligne de flottaison de la structure support. Les turbines du premier ensemble sont entraînées par de l'air et les turbines du deuxième ensemble sont entraînées par de l'eau. Avantageusement, la partie immergée et la partie non immergée de la structure sont de préférence découplées pour permettre au moins une rotation relative autour de la direction verticale, de sorte que chaque ensemble de turbines s'oriente indépendamment l'un de l'autre par rapport à son flux.

Selon un autre mode de réalisation, ledit dispositif est un dispositif terrestre.

Selon un mode de réalisation, la structure support comprend des montants verticaux auxquels sont assemblés les éléments de guidage de flux des turbines.

Selon un mode de réalisation, chaque élément de guidage de flux est de forme générale tronconique, la portion centrale de la surface interne étant circulaire et les portions d'extrémité amont et aval étant formées par une portion annulaire inclinée s'étendant radialement à partir de la périphérie de la portion centrale circulaire. Dans le cas d'une première direction qui est verticale, et de turbines à axe vertical, pour chaque turbine, le centre de la portion centrale circulaire des éléments de guidage de flux de la turbine peut être situé sur l'axe vertical de la tige axiale de ladite turbine. Ainsi, la turbine munie de ses deux éléments de guidage de flux présente un axe de révolution correspondant audit axe vertical, lui permettant de fonctionner alors de manière optimale quel que soit l'angle d'incidence du flux entrant.

Selon un mode de réalisation particulier, le dispositif de l'invention comprend au moins deux ensembles de turbines. Chaque ensemble de turbines comprend une première turbine et deux deuxièmes turbines telles que définies précédemment. Lesdits ensembles de turbines sont décalés angulairement les uns par rapport aux autres sur la structure support. Avantageusement, les premières turbines sont disposées selon un premier cercle et les deuxièmes turbines sont disposées selon deux deuxièmes cercles de même rayon décalés dans la première direction, par exemple verticalement. Avantageusement, l'angle séparant deux ensembles de turbines consécutifs est constant pour conférer un caractère de révolution au dispositif.

L'invention sera mieux comprise, et d'autres buts, détails, caractéristiques et avantages apparaîtront plus clairement au cours de la description explicative détaillée qui va suivre, en se référant ci-dessous aux dessins annexés, parmi lesquels :
- la figure 1 représente une vue schématique de dessus d'un dispositif selon un premier mode de réalisation de l'invention ;
- la figure 2 représente une vue schématique de côté du dispositif de la figure 1;
- la figure 3 représente une vue schématique de côté de la première turbine du dispositif des figures 1 et 2 ;
- la figure 4 représente une vue schématique de côté d'un dispositif selon un deuxième mode de réalisation de l'invention ;
- la figure 5 représente une vue schématique en perspective du dispositif de la figure 4 ;
- la figure 6 représente une vue schématique de dessus du dispositif des figures 4 et 5 ;
- la figure 7 représente une vue schématique de dessus d'un troisième mode de réalisation ;
- la figure 8 représente une vue schématique de côté du dispositif de la figure 7,
- les figures 9, 10, 11 illustrent des solutions de l'art antérieur et,
- les figures 12,13 représentent chacune une vue schématique de côté d'une variante de réalisation de la solution de la figure 1.

Selon l'invention, le dispositif de récupération d'énergie comporte au moins deux capteurs d'énergie cinétique de fluide montés sur une structure support. Ces capteurs d'énergie cinétique de fluide sont des turbines à axe vertical ou à axe horizontal. Ces turbines sont entraînées en rotation par le fluide en mouvement d'un milieu ouvert, qui peut par exemple être de l'air ou de l'eau. Chaque turbine est montée entre deux éléments de guidage de flux de forme profilée, disposés de telle sorte que la corde de la section de la forme profilée soit sensiblement parallèlement à la direction du flux, et décalés verticalement ou horizontalement l'un de l'autre. Les turbines et leurs éléments de guidage de flux sont disposés les uns par rapport aux autres pour améliorer la performance globale du dispositif.

Selon un premier mode de réalisation de l'invention illustré par les figures 1 à 3, le dispositif comporte trois turbines 1, 21 et 22 montées sur une structure support représentée partiellement sur la figure 1 sous la référence 4. Ces turbines sont couplées à au moins un alternateur (non représenté) pour produire de l'énergie électrique lorsque le fluide en mouvement entraîne en rotation les turbines, ledit alternateur étant par exemple installé à l'intérieur d'un élément de guidage. Dans le présent mode de réalisation, les turbines sont à axe vertical.

En référence à la figure 3, la première turbine 1 comprend une tige axiale verticale 10 et des pales 12 reliées à la tige axiale par des bras 11. Chaque pale de forme profilée crée une portance qui, lorsque le fluide circulant à travers la turbine est en mouvement, génère un mouvement rotatif de la tige axiale et entraîne alors l'alternateur par des moyens appropriés. Chaque turbine comporte de préférence au moins deux pales.

La première turbine 1 comporte deux éléments de guidage de flux, à savoir un premier élément de guidage de flux dit supérieur 13 et un second élément de guidage dit inférieur 14, décalés verticalement dans une première direction Z dite verticale, et entre lesquels est montée la tige axiale. Ces éléments de guidage sont de type « lentille » et sont disposés de part et d'autre de la turbine de telle sorte que leurs cordes respectives soient sensiblement parallèles et perpendiculaires à la première direction Z. Ils présentent un intrados 15 pour guider le flux vers les pales de la turbine et un extrados 16. Les intrados 15 des éléments de guidage 13 et 14 sont en vis-à-vis.

Dans le mode de réalisation présenté, les éléments de guidage sont de forme générale tronconique. L'extrados 16 correspondant à la grande surface ou grande base plane du tronc de cône présente une forme convexe. L'intrados 15 comprend une portion centrale 15a, plane et circulaire, correspondant à la petite surface ou petite base du tronc de cône et une portion annulaire 15b inclinée s'étendant radialement vers l'extérieur depuis la portion centrale circulaire et correspondant à la surface latérale du tronc de cône. Les portions annulaires inclinées des deux éléments de guidage en vis-à-vis forment ainsi, selon le sens F du flux, un convergent et un divergent. Les sections de portions annulaires en vis-à-vis disposées en amont de la turbine par rapport au sens du flux F forment un convergent pour guider et accélérer le fluide entrant vers la turbine, et les sections de portions annulaires en vis-à-vis disposées en aval de la turbine forment un divergent pour mieux diffuser le flux sortant de la turbine.

Les deuxièmes turbines 21, 22 comprennent comme la première turbine 1 une tige axiale verticale et des pales, par exemple au nombre de trois, reliées à la tige axiale par des bras. Chaque deuxième turbine 21, 22 est également montée par sa tige axiale entre un élément de guidage supérieur 231, 232 et un élément de guidage inférieur 241, 242, décalés verticalement, et entre lesquels est montée la tige axiale. Ces éléments de guidage sont profilés et présentent un intrados 25 pour guider le flux vers les pales de la turbine et un extrados 26. Les deuxièmes turbines 21, 22 sont empilées l'une sur l'autre, et sont décalées par rapport à la première turbine dans la deuxième direction X horizontale, qui est parallèle au sens F du flux, de sorte que les deuxièmes turbines soient positionnées en aval de la première turbine par rapport au sens F du flux, les tiges de la première turbine et des deuxièmes turbines étant disposées sensiblement dans un même plan vertical, les tiges des deuxièmes turbines étant sensiblement alignées.

Une deuxième turbine 21, dite supérieure est montée au-dessus de l'autre deuxième turbine 22, dite inférieure. Les éléments de guidage sont comme précédemment de forme générale tronconique, avec un intrados 25 présentant des portions annulaires formant convergent et divergent. Les extrados 26 de l'élément de guidage supérieur 231 de la turbine supérieure et de l'élément de guidage inférieur 242 de la turbine inférieure sont également de forme convexe. La deuxième turbine 21 supérieure est montée au-dessus de la deuxième turbine 22 inférieure de sorte que l'élément de guidage inférieur 241 de la turbine supérieure est accolé à l'élément de guidage supérieur 232 de la turbine inférieure. Les extrados desdits éléments de guidage 241, 232 sont sensiblement plans et sont accolés. Lesdits éléments de guidage 241, 232 constituent un élément de guidage 27 dit intermédiaire, avantageusement formé d'une seule et même pièce.

La première turbine 1 et les deuxièmes turbines 21, 22 sont montées sur la structure support de sorte que l'élément de guidage supérieur 13 de la première turbine est disposé verticalement dans la direction Z entre les éléments de guidage 231 et 241 de la deuxième turbine supérieure et que l'élément de guidage inférieur 14 est disposé verticalement entre les éléments de guidage 232, 242 de la deuxième turbine inférieure.

Lorsque le fluide circule dans la direction F, la première turbine 1 est présente en amont des deux deuxièmes turbines 21 et 22. Le fluide entraînant la première turbine et sortant de cette dernière, passe pour une partie dans la deuxième turbine 21 supérieure et pour une autre partie dans la deuxième turbine 22 inférieure. Les éléments de guidage 241 et 232 sont avantageusement disposés verticalement à mi-distance entre les deux éléments de guidage 13 et 14 de la première turbine, de sorte que le flux sortant de la première turbine est fourni à parts sensiblement égales aux deux deuxièmes turbines. Le fluide passant au-dessus et au-dessous de la première turbine est accéléré sur la surface externe ou extrados 16, des éléments de guidage 13 et 14. La convexité des surfaces externes 16 permet d'accroitre l'accélération du fluide circulant à proximité. Ce fluide accéléré sur l'extrados aspire le fluide sortant de la turbine 1 avant d'entrer dans les deuxièmes turbines 21, 22.

Avantageusement, les éléments de guidage de la première turbine d'une part et les éléments de guidage de flux des deux deuxièmes turbines d'autre part sont disposés de manière à se chevaucher partiellement dans la direction horizontale X. Cette disposition participe à la réduction de l'encombrement du dispositif dans un plan horizontal.

Par ailleurs, le centre de la portion centrale circulaire des éléments de guidage de chaque turbine est avantageusement situé sur l'axe vertical de la tige axiale de la turbine. La turbine munie de deux éléments de guidage ainsi définis présente une symétrie de révolution, l'axe de révolution correspondant à l'axe de la tige axiale. La turbine fonctionne alors de manière optimale quel que soit l'angle d'incidence du flux entrant.

Comme montré partiellement sur la figure 1, les éléments de guidage de flux de chaque turbine sont fixés à deux montants verticaux 4, disposés par exemple symétriquement par rapport à l'axe de la tige axiale de la turbine. Le dispositif comprend deux montants 4 sur lesquels sont fixés les éléments de guidage de flux 13 et 14. Il comprend deux autres montants sur lesquels sont fixés les éléments de guidage 231, 241, 232, 242. Ces montants verticaux sont profilés pour perturber le moins possible le flux.

Un dispositif comportant un seul ensemble de trois turbines a été décrit en référence aux figures 1 à 3. Selon un autre mode de réalisation, le dispositif comporte une pluralité d'ensembles de première turbine et deuxièmes turbines tels que décrits précédemment. Ces ensembles peuvent être juxtaposés les uns à côté des autres dans la direction Y, et/ou les uns derrière les autres dans la direction X. Ces ensembles peuvent aussi être empilés les uns sur les autres verticalement en colonnes dans la direction Z. Le dispositif peut également comprendre des ensembles d'au moins trois turbines, par exemple un ensemble comprenant deux premières turbines empilées l'une sur l'autre et trois deuxièmes turbines empilées également les unes sur les autres, les deux premières turbines étant disposées en amont des trois deuxièmes turbines.

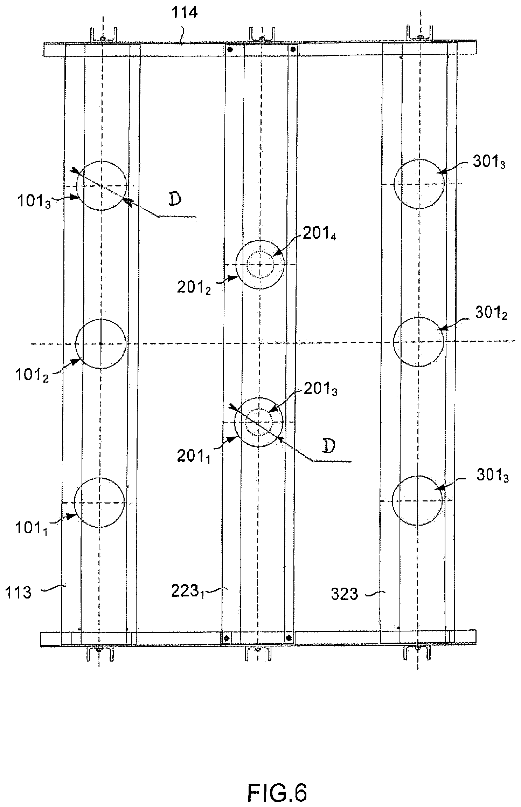

Les figures 4 à 6 illustrent un dispositif selon un deuxième mode de réalisation selon l'invention. Le dispositif, par exemple de type hydrolienne comprend une rangée de trois premières turbines 1011, 1012, 1013, quatre deuxièmes turbines 2011, 2012, 2013, 2014 disposées en deux rangées superposées de deux deuxièmes turbines, et une rangée de trois troisièmes turbines 3031, 3032, 3033. Dans ce mode de réalisation les premières et deuxièmes turbines sont disposées de sorte que chaque deuxième turbine soit décalée par rapport à une première turbine dans la première direction Z verticale et dans la deuxième direction X horizontale, ainsi que dans la troisième direction Y horizontale qui est perpendiculaire au sens F du flux.

Dans la rangée de premières turbines, les premières turbines sont décalées les unes des autres dans la direction Y.

Deux deuxièmes turbines 2011, 2012, dites supérieures, d'une rangée supérieure sont décalées l'une de l'autre dans la direction Y et deux deuxièmes turbines 2013, 2014, dites inférieures, d'une rangée inférieure sont décalées l'une de l'autre dans la direction Y. Les deux rangées inférieure et supérieure sont disposées l'une au-dessus de l'autre dans la direction Z, avec une turbine supérieure disposée au-dessus d'une turbine inférieure, sensiblement sans décalage entre elles dans la direction Y, et sont décalées dans la direction X par rapport à la rangée de première turbine de sorte que les deuxièmes turbines soient disposées en aval des premières turbines par rapport au sens F du flux. Les deux rangées de deuxièmes turbines sont en outre décalées dans la direction Y par rapport aux premières turbines, de sorte que chaque deuxième turbine est disposée entre deux premières turbines dans la direction Y, et sont décalées dans la direction Z par rapport à la rangée de premières turbines, de sorte que les deuxièmes turbines supérieures sont décalées vers le haut dans la direction Z par rapport aux premières turbines et les deuxièmes turbines inférieures sont décalées vers le bas dans la direction Z par rapport aux premières turbines.

Dans la rangée de troisièmes turbines, les troisièmes turbines sont décalées les unes des autres dans la direction Y. Cette rangée est uniquement décalée dans la direction X par rapport à la rangée de premières turbines de sorte que les troisièmes turbines sont disposées en aval des deuxièmes turbines par rapport au sens F et que chaque troisième turbine s'étend sensiblement dans le prolongement d'une première turbine

Les premières turbines sont montées entre un profilé supérieur 113 commun et un profilé 114 inférieur commun constituant respectivement les éléments de guidage de flux supérieur et les éléments de guidage inférieur des premières turbines. Les profilés supérieur et inférieur s'étendent selon leur plus grande dimension dans la troisième direction Y, et présentent une section transversale de type « aile », avec une surface externe 116 ou extrados, de forme convexe du bord d'attaque jusqu'au bord de fuite, et une surface interne 115 ou intrados sensiblement plane. Le bord d'attaque et le bord de fuite de chaque profilé sont décalés l'un de l'autre dans la deuxième direction X, Le profilé présente un bord d'attaque convexe dont une partie forme un convergent pour guider le flux vers les premières turbines. Le profilé présente un bord de fuite convexe dont une partie forme un divergent pour guider le flux en sortie des premières turbines.

De manière analogue, les deuxièmes turbines 2011, 2012 supérieures sont montées entre un profilé 2231 supérieur commun et un profilé 227 intermédiaire commun, constituant respectivement leurs éléments de guidage supérieur et leurs éléments de guidage inférieur. Les deuxièmes turbines 2013, 2014 inférieures sont montées entre ledit profilé 227 intermédiaire et un profilé 2242 inférieur, constituant respectivement leurs éléments de guidage supérieur et leurs éléments de guidage inférieur. Le profilé 2231 supérieur et le profilé 2242 inférieur ont sensiblement la même forme que les profilés 113, 114 des premières turbines, et présentent des extrados convexes et des intrados sensiblement plans avec des bords d'attaque et des bords de fuite formant respectivement convergents et divergents. Le profilé 227 intermédiaire présente une surface supérieure et une surface inférieure sensiblement plane avec un bord d'attaque et un bord de fuite convexe.

Les troisièmes turbines 3031, 3032, 3033 sont montées entre un profilé 323 supérieur et un profilé 324 inférieur, de la même façon que les premières turbines.

Les turbines sont montées via les extrémités de leurs profilés respectifs à une structure support 104, de sorte que les cordes des profilés 113, 323 supérieurs des premières turbines et des troisièmes turbines soient positionnées dans la direction Z sensiblement entre le profilé 2231 supérieur et le profilé 227 intermédiaire des deuxièmes turbines supérieures, et que les profilés 114, 324 inférieurs des premières turbines et des troisièmes turbines soient positionnés dans la direction Z entre le profilé 227 intermédiaire et le profilé 2242 inférieur des deuxièmes turbines.

Chaque turbine peut en outre comprendre deux profilés dits verticaux disposés sensiblement perpendiculairement aux éléments de guidage de flux, décalés l'un de l'autre dans la direction Y, constituant des éléments de guidage de flux supplémentaires. Ces profilés verticaux sont avantageusement montés entre les éléments de guidage de flux supérieur et inférieur, un profilé vertical pouvant être commun à deux turbines adjacentes d'une même rangée.

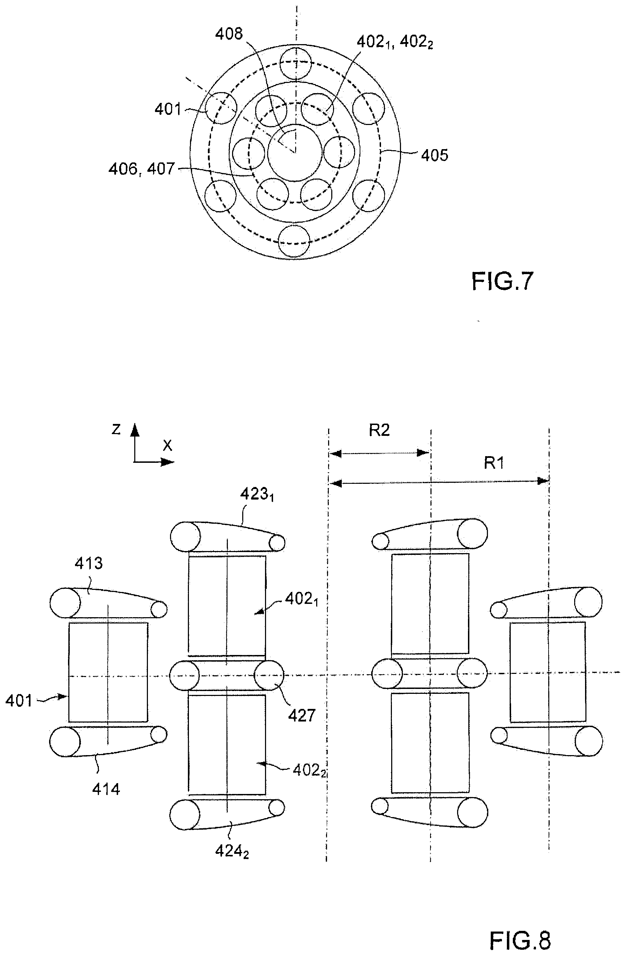

Selon un troisième mode de réalisation particulier, le dispositif de l'invention illustré figures 7 et 8 comprend une pluralité d'ensembles de première turbine 401 et deuxièmes turbines 4021, 4022 tels que définis précédemment, lesdits ensembles de turbines étant décalés angulairement les uns par rapport aux autres sur la structure support, les premières turbines étant disposées selon un premier cercle 405 de rayon R1 et les deuxièmes turbines supérieures et inférieures étant disposées selon deux autres cercles 406, 407, de rayon R2<R1, décalés verticalement, lesdits cercles de rayon R1 et R2 étant concentriques. L'angle 408 séparant deux ensembles de turbines consécutifs est avantageusement constant pour conférer un caractère de révolution au dispositif. Dans ce mode réalisation, les éléments de guidage de flux des premières turbines du dispositif sont formés à partir de deux premiers anneaux profilés concentriques 413, 414 décalés verticalement et sensiblement de mêmes rayons internes et externes, les premières turbines 401 étant montées entre ces deux premiers anneaux. Pour chaque première turbine, la portion ou section d'anneau 413 qui est au-dessus de ladite turbine constitue l'élément de guidage supérieur et la portion ou section d'anneau 414 qui est au-dessous de ladite turbine constitue l'élément de guidage inférieur. De même, trois deuxièmes anneaux 4231, 427, 4242, ayant un rayon inférieur aux premiers anneaux, sont prévus pour former respectivement les éléments de guidage supérieur et inférieur des deuxièmes turbines. Les deuxièmes turbines supérieures 4021 sont montées entre un deuxième anneau supérieur 4231et un deuxième anneau intermédiaire 427, tandis que les deuxièmes turbines inférieures 4022 sont montées entre ledit deuxième anneau intermédiaire 427 et un deuxième anneau inférieur 4242.

Les essais en tunnel de circulation ont consisté à immerger la structure complète (illustrée figures 4 à 6), dans un flux d'eau douce homogène de vitesse V. Les vitesses de rotation de chaque turbine ont été enregistrées. Ces essais ont montré que la vitesse de rotation des deuxièmes turbines est au moins 1,5 fois supérieure à celle des premières turbines, et peut être jusqu'à 3 fois supérieure à celle des premières turbines, et que la vitesse de rotation des troisièmes turbines est au moins 1,4 fois supérieure à celle des premières turbines, et peut être jusqu'à 2,5 fois supérieure à celle des premières turbines.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

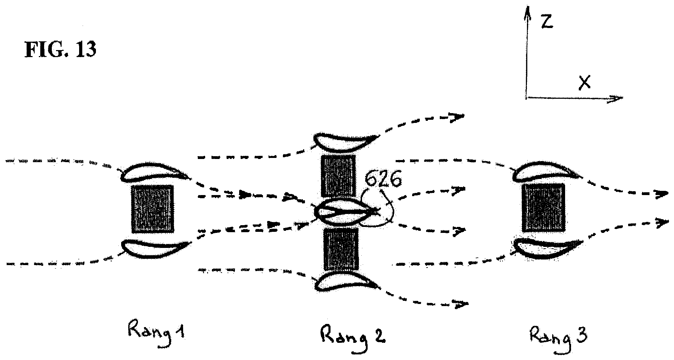

Figures 12,13 mais ceci s'applique dans d'autres cas, tel celui de la figure 1, la disposition illustrée génère un écoulement qui se trouve significativement accéléré pour les turbines des rangs 2 et 3.

L'objectif atteint a été de retirer la puissance maximale pour un tube de fluide en déplacement donné.

Ceci peut se traduire par le fait d'avoir remplacé une grande turbine dont le rendement ne peut dépasser 59% et ayant un impact environnemental important (perturbant) par une juxtaposition organisée et calculée de plusieurs plus petites turbines, de préférence identiques, équipées des éléments de guidage décrits précédemment afin d'atteindre un rendement global supérieur à 59% par rapport au tube de fluide en déplacement de référence, et ceci d'autant plus si le fluide est liquide.

Figure 12, on retrouve ainsi un dispositif multi-étages (axe Z, au moins pour le rang 2) et multi-rangs (axe X), avec des éléments de guidage 513, 514, 5242, 5341, 5342 d'axe perpendiculaire à l'axe des turbines (horizontaux pour des turbines telles 501) à axe vertical, comme ici.

Le premier rang de turbines, avec ses éléments de guidage à extrados (516, 5261, 5262) convexe, a pour effet de créer un « frein », qui, associé aux éléments de guidage représentés donc en coupe verticale notamment figures 1 et 12, contribue à l'amélioration notable des performances des rangs suivants.

Avec la disposition décrite et illustrée et cette convexité du côté opposé à la turbine (donc en extrados), pour la (chaque) turbine de rang 1 et, de préférence, au moins pour l'élément de guidage extérieur (surfaces 5261, 5262 figure 12) de chaque deuxième turbine (turbines de rang 2, ici 5021, 5022), présente un (26,226...), ceci va générer l'écoulement illustré en pointillés figure 12 ou 13 (qui existe aussi notamment dans le cas de la figure 1) et qui se trouve significativement accéléré pour les turbines des rangs 2 et 3.

Ainsi, il a été possible d'atteindre un rendement global supérieur en rendement la limite de Betz pré-indiquée de 59% par rapport au tube de fluide en déplacement de référence, en retirant de la puissance maximale pour un tube de fluide en déplacement donné.

Dans la solution de la figure 12, l'intrados (qui est toujours situé côté turbine) est concave ; il pourrait être sensiblement plat ; de même figure 13, pour :
- les turbines non interposées verticalement entre deux autres (rangs 1 et 3, dans les exemples illustrés)
- et/ou les turbines extrêmes, respectivement la plus haute et la plus et la plus basse, pour les rangs « multi-étages » (rang 2 illustré), étant précisé que, pour celles-ci, on pourrait être amené à inverser les profils, c'est-à-dire intrados convexe comme illustré figure 13.

A noter aussi que, pour les éléments de guidage « intermédiaires », ici rang 2 (celui à turbines empilées), un profil symétrique à double convexité supérieure/inférieure, repéré 626 figure 13 (voir aussi figure 12), peut utilement être prévu entre les turbines empilées parallèlement à l'axe de rotation de ces turbines (ici donc verticalement).

## Revendications

1. Dispositif de récupération d'énergie à partir d'un fluide en mouvement comprenant au moins une première (1 ; 1011, 1012, 1013 ; 401) et au moins deux deuxièmes turbines (21, 22 ; 2011, 2012, 2013, 2014 ; 4021, 4022) à axes de rotation sensiblement parallèles et couplées à au moins un alternateur pour produire de l'énergie électrique lorsque le fluide en mouvement entraîne en rotation lesdites turbines,
**caractérisé en ce que** chaque turbine est montée entre un premier élément de guidage (13, 231, 232 ; 113, 2231, 227, 323 ; 413, 4231, 427) de flux et un second élément de guidage (14, 241, 242 ; 114, 227, 2242, 324 ; 414, 427, 4242) de flux dans une première direction (Z) perpendiculaire au sens (F) du flux de fluide, chacun des éléments de guidage étant de forme générale profilée,
**en ce que** les deuxièmes turbines (21, 22 ; 2011, 2012, 2013, 2014 ; 401, 4021, 4022) sont disposées en aval de la première turbine dans une deuxième direction (X) parallèle au sens du flux,
et **en ce que** lesdites deuxièmes turbines (21, 22 ; 2011, 2012, 2013, 2014 ; 4021, 4022) sont décalées l'une par rapport à l'autre dans la première direction (Z), de sorte que le premier élément de guidage (13 ; 113 ; 413) de la première turbine (1; 1011, 1012, 1013 ; 401) soit positionné dans la première direction (Z) entre les deux éléments de guidage (231, 241 ; 2231, 227 ; 4231, 427) d'une deuxième turbine (21, ; 2011, 2012 ; 4021) et que le deuxième élément de guidage (14, 114, 414) de la première turbine soit positionné dans la première direction (Z) entre les deux éléments de guidage de flux (232, 242 ; 227, 2242 ; 427, 4242) de l'autre deuxième turbine (22 ; 2013, 2014 ; 4022).

2. Dispositif selon la revendication 1, **caractérisé en ce que** le premier élément de guidage (13 ; 113 ; 413) et/ou le second élément de guidage (14, 114, 414) de la première turbine (1; 1011, 1012, 1013 ; 401) présente un extrados convexe.

3. Dispositif selon la revendication 1 ou 2, **caractérisé en ce que** chaque deuxième turbine (21, 22 ; 2011, 2012, 2013, 2014 ; 4021, 4022) est décalée par rapport à la première turbine (1 ; 1011, 1012, 1013 ; 401) dans une troisième direction (Y), perpendiculaire à la première direction (Z) et à la deuxième direction (X).

4. Dispositif selon la revendication 3, **caractérisé en ce qu'**une première turbine (1011) est positionnée dans la troisième direction (Y) entre deux deuxièmes turbines (2011, 2012, 2013, 2014) décalées l'une par rapport à l'autre dans ladite troisième direction (Y).

5. Dispositif selon l'une des revendications 3,4, **caractérisé en ce qu'**il comprend au moins deux premières turbines (1011, 1012, 1013) décalées l'une par rapport à l'autre dans la troisième direction (Y), les premiers et seconds éléments de guidage (113, 114) des premières turbines s'étendant dans leur plus grande dimension dans la troisième direction (Y) entre les deux premières turbines.

6. Dispositif selon les revendications 3 et 5, **caractérisé en ce que** chaque deuxième turbine (2011, 2012, 2013, 2014) est positionnée dans la troisième direction (Y) entre deux premières turbines (1011, 1012, 1013) décalées l'une par rapport à l'autre dans ladite troisième direction Y.

7. Dispositif selon les revendications 1 à 6, **caractérisé en ce qu'**il comprend au moins une troisième turbine (3031, 3032, 3033) décalée par rapport à une première turbine (1011, 1012, 1013) dans la deuxième direction (X), de sorte que la troisième turbine soit disposée en aval de la deuxième turbine (2011, 2012, 2013, 2014) par rapport au sens (F) de déplacement du flux de fluide, ladite troisième turbine ayant un positionnement dans la première direction (Z) sensiblement identique à celui de ladite première turbine.

8. Dispositif selon les revendications 3, 4, et 7, **caractérisé en ce qu'**il comprend au moins quatre deuxièmes turbines (2011, 2012, 2013, 2014) disposées en deux rangées superposées de deux deuxièmes turbines, et au moins une troisième turbine (3031, 3032, 3033), les turbines d'une rangée étant décalées les unes des autres dans la troisième direction (Y).

9. Dispositif selon l'une des revendications 1 à 8, **caractérisé en ce que** chaque turbine comprend en outre deux éléments de guidage supplémentaires, de forme profilé, décalés l'un de l'autre dans la troisième direction (Y).

10. Dispositif selon l'une des revendications 1 à 9, **caractérisé en ce que** ledit dispositif est un dispositif marin, comprenant une structure offshore flottante et ancrée au fond sous-marin en un ou plusieurs points, ou une structure offshore fixe, comprenant des turbines éoliennes et/ou hydroliennes.

11. Dispositif selon l'une des revendications 1 à 9, **caractérisé en ce que** les turbines sont immergées, de façon à être entraînées par de l'eau.

12. Dispositif selon l'une des revendications 1 à 11, **caractérisé en ce que** :
- les premier et second éléments de guidage de la première turbine présente un extrados (16, 26, 116) convexe, et/ou
- au moins l'élément de guidage extérieur de chaque deuxième turbine (231, 241, 232, 242 ; 2231, 227, 2242 ; 4231, 427, 4242...) présente un extrados (26, 226...) convexe.

13. Dispositif selon la revendication 1, **caractérisé en ce qu'**il comprend au moins deux deuxièmes turbines (2011, 2012, 2013, 2014 ; 4021, 4022) décalées l'une par rapport à l'autre dans la troisième direction (Y), les premiers et seconds éléments de guidage (113, 114 ; 413, 414) des premières turbines (1011, 1012, 1013 ; 401) s'étendant dans leur plus grande dimension dans la troisième direction entre les deux premières turbines.

## Patentansprüche

1. Vorrichtung zur Rückgewinnung von Energie aus einer strömenden Flüssigkeit, umfassend zumindest eine erste (1; 1011, 1012, 1013; 401) und zumindest zwei zweite Turbinen (21, 22; 2011, 2012, 2013, 2014; 4021, 4022) mit in etwa parallelen Rotationsachsen und mit zumindest einer Lichtmaschine gekoppelt, um elektrische Energie zu erzeugen, wenn die strömende Flüssigkeit die besagten Turbinen in Rotation versetzt,
**dadurch gekennzeichnet, dass** jede Turbine zwischen einem ersten Leitelement (13, 231, 232; 113, 2231, 227, 323; 413, 4231, 427) einer Strömung und einem zweiten Leitelement (14, 241, 242; 114, 227, 2242, 324; 414, 427, 4242) einer Strömung in eine erste Richtung (Z) senkrecht zur Richtung (F) der Flüssigkeitsströmung montiert ist, wobei jedes der Leitelemente eine allgemeine profilierte Form aufweist,
dadurch, dass die zweiten Turbinen (21, 22; 2011, 2012, 2013, 2014; 401, 4021, 4022) stromabwärts der ersten Turbine in eine zweite Richtung (X) parallel zur Richtung der Strömung angeordnet sind,
und dadurch, dass die besagten zweiten Turbinen (21, 22; 2011, 2012, 2013, 2014; 4021, 4022) zueinander in die erste Richtung (Z) versetzt sind, sodass das erste Leitelement (13; 113; 413) der ersten Turbine (1; 1011, 1012, 1013; 401) in die erste Richtung (Z) zwischen den beiden Leitelementen (231, 241; 2231, 227; 4231, 427) einer zweiten Turbine (21, ; 2011, 2012; 4021) positioniert ist, und das zweite Leitelement (14, 114, 414) der ersten Turbine in der ersten Richtung (Z) zwischen den beiden Leitelementen einer Strömung (232, 242; 227, 2242; 427, 4242) der anderen zweiten Turbine (22; 2013, 2014; 4022) positioniert ist.

2. Vorrichtung nach Anspruch 1, **dadurch gekennzeichnet, dass** das erste Leitelement (13; 113; 413) und/ oder das zweite Leitelement (14, 114, 414) der ersten Turbine (1; 1011, 1012, 1013; 401) eine konvexe Außenfläche aufweist.

3. Vorrichtung nach Anspruch 1 oder 2, **dadurch gekennzeichnet, dass** jede zweite Turbine (21, 22; 2011, 2012, 2013, 2014; 4021, 4022) im Verhältnis zur ersten Turbine (1; 1011, 1012, 1013; 401) in eine dritte Richtung (Y), senkrecht zur ersten Richtung (Z) und zur zweiten Richtung (X) versetzt ist.

4. Vorrichtung nach Anspruch 3, **dadurch gekennzeichnet, dass** eine erste Turbine (1011) in der dritten Richtung (Y) zwischen zwei zweiten Turbinen (2011, 2012, 2013, 2014) positioniert ist, die in die besagte dritte Richtung (Y) zueinander versetzt sind.

5. Vorrichtung nach einem der Ansprüche 3, 4, **dadurch gekennzeichnet, dass** sie zumindest zwei erste Turbinen (1011, 1012, 1013) umfasst, die in die dritte Richtung (Y) zueinander versetzt sind, wobei sich die ersten und zweiten Leitelemente (113, 114) der ersten Turbinen in ihrer größten Abmessung in die dritte Richtung (Y) zwischen den beiden ersten Turbinen erstrecken.

6. Vorrichtung nach den Ansprüchen 3 und 5, **dadurch gekennzeichnet, dass** jede zweite Turbine (2011, 2012, 2013, 2014) in der dritten Richtung (Y) zwischen zwei ersten Turbinen (1011, 1012, 1013) positioniert ist, die in die besagte dritte Richtung Y zueinander versetzt sind.

7. Vorrichtung nach den Ansprüchen 1 bis 6, **dadurch gekennzeichnet, dass** sie zumindest eine dritte Turbine (3031, 3032, 3033) umfasst, die im Verhältnis zu einer ersten Turbine (1011, 1012, 1013) in die zweite Richtung (X) versetzt ist, sodass die dritte Turbine stromabwärts der zweiten Turbine (2011, 2012, 2013, 2014) in Bezug auf die Richtung (F) der Strömung der Flüssigkeit angeordnet ist, wobei die besagte dritte Turbine eine Positionierung in die erste Richtung (Z) in etwa identisch zu jener der besagten ersten Turbine aufweist.

8. Vorrichtung nach den Ansprüchen 3, 4 und 7, **dadurch gekennzeichnet, dass** sie zumindest vier zweite Turbinen (2011, 2012, 2013, 2014) umfasst, die in zwei überlagerten Reihen von zwei zweiten Turbinen angeordnet sind, und zumindest eine dritte Turbine (3031, 3032, 3033), wobei die Turbinen einer Reihe in die dritte Richtung (Y) zueinander versetzt sind.

9. Vorrichtung nach einem der Ansprüche 1 bis 8, **dadurch gekennzeichnet, dass** jede Turbine darüber hinaus zwei zusätzliche Leitelemente in profilierter Form umfasst, die in die dritte Richtung (Y) zueinander versetzt sind.

10. Vorrichtung nach einem der Ansprüche 1 bis 9, **dadurch gekennzeichnet, dass** die besagte Vorrichtung eine Meeresvorrichtung ist, eine schwimmende und an einer oder mehreren Stellen am Meeresgrund verankerte Offshore-Struktur umfassend, oder eine feststehende Offshore-Struktur, Windrad- und/ oder Gezeitenkraftwerksturbinen umfassend.

11. Vorrichtung nach einem der Ansprüche 1 bis 9, **dadurch gekennzeichnet, dass** die Turbinen eingetaucht sind, um von Wasser angetrieben zu werden.

12. Vorrichtung nach einem der Ansprüche 1 bis 11, **dadurch gekennzeichnet, dass**:
- die ersten und zweiten Leitelemente der ersten Turbine eine konvexe Außenfläche (16, 26, 116) aufweisen, und/ oder
- zumindest das externe Leitelement jeder zweiten Turbine (231, 241, 232, 242; 2231, 227, 2242; 4231, 427, 4242...) eine konvexe Außenfläche (26, 226...) aufweist.

13. Vorrichtung nach Anspruch 1, **dadurch gekennzeichnet, dass** sie zumindest zwei zweite Turbinen (2011, 2012, 2013, 2014; 4021, 4022) umfasst, die in die dritte Richtung (Y) zueinander versetzt sind, wobei sich die ersten und zweiten Leitelemente (113, 114; 413, 414) der ersten Turbinen (1011, 1012, 1013; 401) in ihrer größten Abmessung in die dritte Richtung zwischen den beiden ersten Turbinen erstrecken.

## Claims

1. Device for recovering energy from a moving fluid comprising at least one first (1; 1011, 1012, 1013; 401) and at least one second (21, 22; 2011, 2012, 2013, 2014; 4021, 4022) turbines with substantially parallel axes of rotation and coupled to at least one alternator in order to produce electrical energy when the fluid in movement drives in rotation said turbines,
**characterised in that** each turbine is mounted between a first guiding element (13, 231, 232; 113, 2231, 227, 323; 413, 4231, 427) of flow and a second guiding element (14, 241, 242; 114, 227, 2242, 324; 414, 427, 4242) of flow in a first direction (Z) perpendicular to the direction (F) of the flow of fluid, with each of the guiding elements being generally streamlined in shape,
and **in that** the second turbines (21, 22; 2011, 2012, 2013, 2014; 401, 4021, 4022) are arranged downstream of the first turbine in a second direction (X) parallel to the direction of the flow,
and **in that** said second turbine (21, 22; 2011, 2012, 2013, 2014; 4021, 4022) are shifted with respect to one another in the first direction (Z), in such a way that the first guiding element (13; 113; 413) of the first turbine (1; 1011, 1012, 1013; 401) is positioned in the first direction (Z) between the two guiding elements (231, 241; 2231, 227; 4231, 427) of a second turbine (21, ; 2011, 2012; 4021) and that the second guiding element (14, 114, 414) of the first turbine is positioned in the first direction (Z) between the two guiding element of flow (232, 242; 227, 2242; 427, 4242) of the other second turbine (22; 2013, 2014; 4022).

2. Device according to claim 1, **characterised in that** the first guiding element (13; 113; 413) and/or the second guiding element (14, 114, 414) of the first turbine (1; 1011, 1012, 1013; 401) has a convex extrados.

3. Device according to claim 1 or 2, **characterised in that** each second turbine (21, 22; 2011, 2012, 2013, 2014; 4021, 4022) is shifted in relation to the first turbine (1; 1011, 1012, 1013; 401) in a third direction (Y), perpendicular to the first direction (Z) and to the second direction (X).

4. Device according to claim 3, **characterised in that** a first turbine (1011) is positioned in the third direction (Y) between two second turbines (2011, 2012, 2013, 2014) shifted in relation to one another in said third direction (Y).

5. Device according to one of claims 3, 4, **characterised in that** it comprises at least two first turbines (1011, 1012, 1013) shifted in relation to one another in the third direction (Y), the first and second guiding elements (113, 114) of the first turbines extending in their largest dimension in the third direction (Y) between the two first turbines.

6. Device according to claims 3 and 5, **characterised in that** each second turbine (2011, 2012, 2013, 2014) is positioned in the third direction (Y) between two first turbines (1011, 1012, 1013) shifted in relation to one another in said third direction Y.

7. Device according to claims 1 to 6, **characterised in that** it comprises at least one third turbine (3031, 3032, 3033) shifted in relation to a first turbine (1011, 1012, 1013) in the second direction (X), in such a way that the third turbine is arranged downstream of the second turbine (2011, 2012, 2013, 2014) in relation to the direction (F) of displacement of the flow of fluid, said third turbine having a positioning in the first direction (Z) substantially identical to that of said first turbine.

8. Device according to claims 3, 4, and 7, **characterised in that** it comprises at least four second turbines (2011, 2012, 2013, 2014) arranged in two superimposed rows of two second turbines, and at least one third turbine (3031, 3032, 3033), with the turbines of one row being shifted from one another in the third direction (Y).

9. Device according to one of claims 1 to 8, **characterised in that** each turbine further comprises two additional guiding elements, of streamlined shape, shifted from one another in the third direction (Y).

10. Device according to one of claims 1 to 9, **characterised in that** said device is a marine device, comprising a floating offshore structure and anchored to the seabed at one or several points, or a fixed offshore structure, comprising wind and/or marine current turbines.

11. Device according to one of claims 1 to 9, **characterised in that** the turbines are immersed, in such a way as to be driven by water.

12. Device according to one of claims 1 to 11, **characterised in that**:
- the first and second guiding elements of the first turbine has a convex extrados (16, 26, 116), and/or
- at least the outer guiding element of each second turbine (231, 241, 232, 242; 2231, 227, 2242; 4231, 427, 4242...) has a convex extrados (26, 226...).

13. Device according to claims 1, **characterised in that** it comprises at least two second turbines (2011, 2012, 2013, 2014; 4021, 4022) shifted in relation to one another in the third direction (Y), the first and second guiding elements (113, 114; 413, 414) of the first turbines (1011, 1012, 1013; 401) extending in their largest dimension in the third direction between the two first turbines.
